# EUROPEAN PATENT SPECIFICATION

(11) **EP 0 563 097 B1**
(45) Date of publication and mention of the grant of the patent: **05.10.1994**
(21) Application number: 92900631.0
(22) Date of filing: 16.12.1991
(51) Int. Cl.: C02F 11/00, C04B 28/26, C04B 18/04

(54) **PROCESSING WASTE SOLIDIFICATION**
VERFAHREN ZUR VERFESTIGUNG VON ABFALLSTOFFEN
SOLIDIFICATION DE L'EFFLUENT DE TRAITEMENT

(30) Priority: 18.12.1990 GB 9027427
(43) Date of publication of application: 06.10.1993
(73) Proprietor: KODAK LIMITED, Harrow, Middlesex HA1 4TY (GB); EASTMAN KODAK COMPANY, Rochester, New York 14650-2201 (US)
(72) Inventor: GLOVER, Edward Charles Timothy Samuel, London NW2 2HG (GB); GLOVER, Martyn Stuart, Garston, Herts WD2 4NJ (GB); FYSON, John Richard, London E9 7AS (GB)
(74) Representative: Haile, Helen Cynthia
(86) International application number: EP9102415
(87) International publication number: WO9211213

(56) References cited:
- EP-A- 0 181 010
- FR-A- 2 098 777
- GB-A- 1 432 091
- WORLD PATENTS INDEX LATEST Section Ch, Week 8903, Derwent Publ. Ltd., London, GB; Class D, Page 15, AN 89-018046 & JP,A,63 291 679 29. Nov. 1988, see abstract
- WORLD PATENTS INDEX LATEST Section CH, Week 8903, Derwent Publ. Ltd., London, GB; & JP-A, 63 291 680, 29. Nov. 1988
- WORLD PATENTS INDEX LATEST Section Ch, Week 8602, Dewent Publ. Ltd., London, GB; & JP,A,60 237 398, 26. Nov. 1985

## Description

This invention relates to solidification of solid processing waste and in particular to solidification of photographic waste to render it more environmentally acceptable.

The overflow from a photographic processor will typically consist of environmentally undesirable substances such as heavy metal ions, sequestering agents, substances that have a high oxygen demand and colour developing agents and their derivatives, straight disposal of which contravenes sewer regulations in many parts of the world. It is therefore essential that the overflow is converted by chemical or physical means to a liquid which can be poured into the sewer and/or a residual solid which can be removed to a place of safe and legal disposal.

The use of an alkali metal silicate as one additive in treating certain industrial processing waste, such as radioactive and metal plating wastes, has been disclosed, for example, in Japanese Patent Publication No.60237398 and U.K. Patent No. 1432091 respectively.

Co-pending PCT application No. PCT/EP 91/01680 and PCT/EP 91/01681 (WO-A-92/04660 and WO-A-92/04282 describe the addition of chemical reagents to precipitate, adsorb or otherwise remove harmful pollutants in particular in photographic waste processing. Japanese Patent Publication No. 51099854 describes the use of an oxide, hydroxide or water soluble salt of an alkaline earth metal to precipitate heavy metal ions in a photographic waste effluent.

Japanese Patent Publication No. 63291680 discloses the use of a solidifying agent in the final stage of treatment of photographic waste, wherein the solidifying agent is a hardener, such as cement, or a desiccant such as silica gel. The liquid absorbing agent is a powder or particle with a diameter of 0.01-3mm which is not soluble in water.

The use of a water-soluble silicate, in particular an alkali metal silicate, in the field of photographic waste effluent treatment has nowhere been documented. However, it has now been found that such an addition to a photographic waste that has previously been treated by adding there to an alkaline earth compound or another compound with an oxidation number (or valency) greater than one, such as manganese, with or without other additions, hardens it over a period of a few days and renders it glass-like. The resulting 'glass' is less permeable to water than the original solid and therefore it is less likely that polluting compounds will wash out from the treated waste compound compared to that which is untreated. Consequently the precipitated photographic waste is more convenient and safer to transport and less harmful to the environment if used for landfill. Moreover, the process is inexpensive and any waste spillage is much easier to remove.

The effluent to be treated may, for example, have arisen from any of the photographic processes described in Item 308119, Research Disclosure December, 1989, Industrial Opportunities Ltd., Hants., U.K., and especially sections XIX, XX and XXIII thereof.

The method applies to any solid waste that has been generated by adding an alkaline earth compound, or another compound with an oxidation number greater than one, to processing solutions in order to precipitate metals and/or oxysulphur compounds. For example waste generated by addition of calcium hydroxide or a mixture of calcium salts and another metal hydroxide, may be particularly suitable. However it is important for the processing solution not to contain ammonium ions to prevent liberation of free ammonia, unless appropriate safety measures are taken.

According to the present invention therefore, there is provided a method of treating photographic effluent containing metal ions with an oxidation number greater than one, comprising the addition of a water-soluble silicate to the effluent in an amount to render it glass-like and less permeable to water.

The silicate may be added to the treated effluent suspension and the mixture separated, for example by filtration or centrifugation, or alternatively it may be added to the pre-separated solid.

Although any water-soluble silicate may be used, conveniently readily available sodium silicate ('water-glass') is used, generally in the form of its solution. The silicate may be added in an amount by dry weight from 5 to 40g per litre of effluent, preferably in the range 10 to 20g, conveniently as a 10 to 15% solution, especially 12%.

The invention will now be described with reference to the following example which in no way limits the scope of the invention.

### Example

- A.: A model processor effluent was made by combining the 300 ml of the following developer amplifier with 500 ml of a bleach-fix, also described below:

| Developer/Amplifier | |
|---|---|
| potassium carbonate | 20g |
| diethyldihydroxylamine | 5g |
| ethylenediaminetetraacetic acid (EDTA) | 1g |
| colour developer CD3 | 4g |
| 30% hydrogen peroxide | 5g |
| water to | 1 litre |
| pH adjusted to 10.3 with sulphuric acid or NaOH | |

| Bleach-fix: | |
|---|---|
| sodium iron (III) EDTA | 20g |
| sodium thiosulphate | 50g |
| sodium sulphite | 20g |
| acetic acid | 20 ml |
| water to | 1 litre |
| the pH was adjusted to 5.5 with acetic acid. | |

0.8g of silver chloride was added to this mixture and this was stirred until it had dissolved. The mixture was left to stand overnight to allow most reactions to complete.

100 ml of this model effluent was poured into a 250 ml beaker. To this was added 4 ml of hydrogen peroxide to reduce the oxygen demand of the mixture by converting the reducing sulphur compounds to their oxidised form. This mixture was stirred for two minutes to allow the reactions to complete, 2.8g of calcium hydroxide was then added to the mixture to precipitate the iron and most of the oxidised sulphur compounds. Following this, 2g of activated charcoal was added to remove colour developing agents and their derivatives, and also the diethylhydroxylamine. After one minute stirring, 10g of Zerolit TM FFip ion-exchange resin was added to remove the sequestering agent, EDTA, and also to reduce the pH by partial removal of hydroxide ions.

The mixture was filtered by standard means using fast filter paper.
- B.: 10g of damp solid generated as in (A) was taken and 2g of 12% sodium silicate solution added. The mixture was stirred and then allowed to stand in a suitable plastic container for two days. The mixture turned solid and could be knocked out of the container as a glass-like pellet.

## Claims

1. A method of treating photographic effluent containing one or more metal ions with an oxidation number greater than one, comprising the addition of a water-soluble silicate to the effluent to render it hard and glass-like and less permeable to water than the original solid in the effluent.

2. A method as claimed in claim 1, in which the silicate is added to the effluent suspension and the mixture then separated by standard methods.

3. A method as claimed in claim 1, in which the silicate is added to the solid which has been separated out from the effluent suspension by standard methods.

4. A method as claimed in any one of the preceding claims, in which the silicate is sodium silicate.

5. A method as claimed in any one of the preceding claims, in which the silicate is added in an amount of from 5 to 40g, preferably 10 to 20g per litre of effluent.

6. A method as claimed in any one of the preceding claims, in which the silicate is added in the form of a solution.

7. A method as claimed in claim 6, in which a 10 to 15% solution, preferably 12% solution, is used.

8. A method as claimed in any one of the preceding claims, in which the metal ion is an alkaline earth.

9. A method as claimed in claim 8, in which the alkaline earth is calcium.

## Patentansprüche

1. Verfahren zur Behandlung von photographischen Abwässern, die ein oder mehrere Metallionen mit einer Oxidationszahl von größer als 1 enthalten, bei dem man den Abwässern ein wasserlösliches Silicat zugibt, um es hart und glasartig und weniger permeabel gegenüber Wasser als den Originalfeststoff in den Abwässern zu machen.

2. Verfahren nach Anspruch 1, bei dem das Silicat der Abwassersuspension zugegeben wird, und bei dem die Mischung dann nach Standardmethoden getrennt wird.

3. Verfahren nach Anspruch 1, bei dem das Silicat dem Feststoff zugegeben wird, der aus der Abwassersuspension nach Standardmethoden abgetrennt worden ist.

4. Verfahren nach einem der vorstehenden Ansprüche, bei dem das Silicat Natriumsilicat ist.

5. Verfahren nach einem der vorstehenden Ansprüche, bei dem das Silicat in einer Menge von 5 bis 40 g, vorzugsweise 10 bis 20 g pro Liter Abwasser zugegeben wird.

6. Verfahren nach einem der vorstehenden Ansprüche, bei dem das Silicat in Form einer Lösung zugegeben wird.

7. Verfahren nach Anspruch 6, bei dem eine 10 bis 15%ige Lösung, vorzugsweise 12%ige Lösung, verwendet wird.

8. Verfahren nach einem der vorstehenden Ansprüche, bei dem das Metallion ein Erdalkaliion ist.

9. Verfahren nach Anspruch 8, bei dem das Erdalkaliion ein Calciumion ist.

## Revendications

1. Procédé de traitement d'effluent photographique contenant un ou plusieurs ions métalliques ayant un nombre d'oxydation supérieur à un, comprenant l'addition à l'effluent d'un silicate soluble dans l'eau en vue de le rendre dur et semblable à du verre et moins perméable à l'eau que le solide d'origine dans l'effluent.

2. Procédé selon la revendication 1, dans lequel le silicate est ajouté à la suspension d'effluent et le mélange est séparé ensuite par des procédés classiques.

3. Procédé selon la revendication 1, dans lequel le silicate est ajouté au solide qui a été séparé de la suspension d'effluent par des procédés classiques.

4. Procédé selon l'une quelconque des revendications précédentes, dans lequel le silicate est le silicate de sodium.

5. Procédé selon l'une quelconque des revendications précédentes, dans lequel le silicate est ajouté en une quantité comprise entre 5 et 40 g, de préférence entre 10 et 20 g par litre d'effluent.

6. Procédé selon l'une quelconque des revendications précédentes, dans lequel le silicate est ajouté sous la forme d'une solution.

7. Procédé selon la revendication 6, dans lequel on utilise une solution à 10 à 15 %, de préférence une solution à 12 %.

8. Procédé selon l'une quelconque des revendications précédentes, dans lequel l'ion métallique est un métal alcalino-terreux.

9. Procédé selon la revendication 8, dans lequel le métal alcalino-terreux est le calcium.
